# EUROPÄISCHE PATENTSCHRIFT

(11) **EP 3 855 052 B1**
(45) Veröffentlichungstag und Bekanntmachung des Hinweises auf die Patenterteilung: **14.05.2025**
(21) Anmeldenummer: 21152009.3
(22) Anmeldetag: 18.01.2021
(51) Int. Cl.: F16K 7/12, F16K 37/00

(54) **MEMBRAN MIT MASCHINENLESBARER KENNZEICHNUNG AM MEMBRANLAPPEN**
MEMBRANE WITH MACHINE-READABLE INDICIA ON MEMBRANE TABS
MEMBRANE POURVU DE MARQUAGE LISIBLE PAR MACHINE SUR LES LANGUETTES DE MEMBRANE

(30) Priorität: 22.01.2020 DE 102020101394
(43) Veröffentlichungstag der Anmeldung: 28.07.2021
(73) Patentinhaber: SISTO Armaturen S.A., 6468 Echternach (LU)
(72) Erfinder: BRITZ, Robert, 6468 Echternach (LU); DIECKMANN, Thomas, 6468 Echternach (LU); SCHAAL, Andreas, 6468 Echternach (LU); HACKENBERGER, Bernd, 6468 Echternach (LU)
(74) Vertreter: Busch, Tobias

(56) Entgegenhaltungen:
- EP-A1- 0 320 091
- EP-A1- 3 025 077
- EP-A1- 3 184 456
- EP-A1- 3 388 143
- EP-A1- 3 569 905
- EP-A1- 3 604 873
- DE-U1- 202018 105 500
- DE-U1- 202018 105 892
- US-A1- 2016 069 474
- US-A1- 2019 162 317

## Beschreibung

Die Erfindung betrifft eine Membran für ein Membranventil, die Räume dichtend voneinander trennt, wobei die Membran zwischen zwei Gehäuseteilen anordenbar ist, wobei die Membran einen Membranlappen umfasst, der geeignet ist, um über eine Membraneinspannung hinauszuragen.

Membranventile können zur Dosierung von unterschiedlichen Fluiden eingesetzt werden, beispielsweise von Gasen, Dämpfen oder Flüssigkeiten. Beispielgebend können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängt im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

Wenn Membranen in einem zugehörigen Membranventil verbaut sind, sind diese nicht mehr von außen sichtbar. Dies ist nachteilig, wenn die Membranen z. B. im Rahmen einer Instandhaltungsmaßnahme ausgetauscht werden müssen, da dann von außen nicht erkennbar ist, welcher Membrantyp im Membranventil verbaut ist. Aus diesem Grund sind Membranen mit einer angeformten Lasche bekannt geworden. Die Laschen stehen dabei derart vom Funktionsbereich der Membran ab, dass sie auch im verbauten Zustand der Membran sichtbar sind. Die Lasche ragt also gegenüber dem zugehörigen Membranventil hervor. Da die Lasche den gleichen Aufbau wie die Membran aufweist, kann anhand der Lasche zumindest grob der Membrantyp erkannt werden. So kann beispielsweise ermittelt werden, ob es sich um eine einschichtige oder eine mehrschichtige Membran handelt und welche Materialien für die verschiedenen Schichten verwendet wurden. Selbstverständlich müssten dafür die verwendeten Materialien auch visuell unterscheidbar sein, was sie in den seltensten Fällen sind.

Da während des Membranaustauschs üblicherweise die Maschinen oder Anlagen, in denen das betreffende Membranventil verbaut ist, außer Betrieb gesetzt werden müssen, ist es im Sinne einer schnellen Membrantauschaktion wichtig, dass der Membrantyp schnell und zuverlässig zu erkennen ist. Insbesondere muss dies auch bei schlecht zugänglichen und schlecht einsehbaren Bauräumen möglich sein. Ein Fehler beim Ermitteln des Membrantyps kann dabei zu Verzögerungen der Membrantauschaktion führen. Für den Fall, dass eine ungeeignete Membran versehentlich im Membranventil verbaut wird, kann es zu Fehlfunktionen des Membranventils kommen. Dies gilt es zu vermeiden.

Auf dem Weg von einer präventiven Instandhaltung hin zu einer zustandsorientierten Instandhaltung, um die Betriebskosten einer verfahrenstechnischen Anlage zu senken, ist ein intelligentes Datenmanagement eine wichtige Voraussetzung. Grundlage dafür ist das flexible und eindeutige Zuordnen von Daten der Membran und/oder des Prozesses, insbesondere das Zuordnen von Daten an der Membran selbst.

Die DE 10 2013 214 304 A1 beschreibt ein Membranventil mit einer vierlagigen Ventilmembran, an der ein Datenträger in Form eines RFID-Chips vorhanden ist. So können nicht nur Daten betreffend die Materialien, die Abmessungen, die Herstellung und ähnliche Kenngrößen der Membran in dem Datenträger abgespeichert und/oder digital im System referenziert werden, sondern auch Daten betreffend den jeweiligen Kunden, die Lieferung, usw. All diese Daten können auf die jeweilige einzelne individuelle Membran ausgerichtet sein und auf deren zugehörigem Datenträger abgespeichert werden. Auf diese Weise kann nicht nur eine Membranverwechslung ausgeschlossen werden, sondern die zugeordneten Daten können die Basis für ein intelligentes Wartungssystem bilden.

Nachteilig ist der umfangreiche und anspruchsvolle Herstellungsprozess. Dabei müssen bei mindestens zwei Membranlagen Taschen in der Lasche ausgestanzt werden. Anschließend erfolgt die mühsame Zentrierung der einzelnen Lagen im Formnest, wobei die Taschenaussparungen genau übereinander platziert werden müssen, da sonst der RFID-Chip nicht eingelegt werden kann. Dabei muss akribisch darauf geachtet werden, dass die unterste Lage ohne Ausstanzung die Tasche verdeckt. Die obere, nicht ausgestanzte Lage muss zur Platzierung des RFID-Chips angehoben werden, ohne dass die dazwischen positionierte Verstärkungseinlage verrutscht. Wenn die oberste und unterste Lage nicht richtig positioniert sind, ist der RFID-Chip nach dem Vulkanisieren nicht dicht eingeschlossen, was für den späteren Einsatz in der sterilen pharmazeutischen Industrie bei Reinigungs- bzw. Sterilisationsprozessen ungünstig ist.

Die DE 10 2017 128 229 A1 beschreibt eine Ventilmembran eines Membranventils, bei der ein RFID-Chip lediglich mit einem Ring in ein durchgestanztes Loch eingehängt wird. Auf diese Weise lassen sich zwar alle elektronischen Daten der Membran speichern und auslesen, jedoch ist der RFID-Chip nicht vor Umwelteinflüssen sowie vor den Betriebsmedien geschützt. Insbesondere Öle oder Schmutz oder dergleichen haben damit einen Einfluss auf die Auslesbarkeit von Daten aus dem Datenträger.

Die EP 3 604 873 A1 beschreibt eine Vorrichtung zur Diagnose einer Membran eines Membranventils oder einer Membranpumpe. Die Vorrichtung umfasst ein erstes Bauteil, bestehend aus einer in einem Gehäuse vorgesehenen Membran, bestehend aus mehreren Membranlagen, wobei ein Teil der Membran aus dem Gehäuse herausragt und den sogenannten Lappen bildet, und ein zweites Bauteil, wobei das zweite Bauteil in einem Teil des Lappens angeordnet ist, wobei zwischen dem Lappen und der übrigen Membran eine Sollbruchstelle vorgesehen ist.

Die DE 20 2018 105 500 U1 offenbart eine Membran für ein Membranventil oder Stellventil, wobei die Membran in dem Membranventil oder Stellventil zum Steuern des Durchflusses dient und wobei an der Membran eine Lasche derart ausgebildet ist, dass sie über die Membranfläche hinausragt und wobei die Lasche zur Fixierung eines Transponders mindestens eine Aussparung aufweist und wobei der Transponder von einer abgeschlossenen Hülle aus Kunststoff, Elastomer oder Silikon umhüllt ist und wobei der umhüllte Transponder mit Hilfe einer Aussparung an der Lasche fixiert ist.

Die EP 3 388 143 A1 beschreibt ein Verfahren zum Herstellen einer Elastomer-Membran. Dieses umfasst ein Anordnen eines elektronischen Datenträgers zwischen zwei Lagen an einer vorbestimmten Position, wobei der elektronische Datenträger zumindest zeitweise mit einer Positionierhilfe verbunden ist. Ebenso ist vorgesehen ein Formpressen der zwei Lagen mit dem dazwischen angeordneten elektronischen Datenträger, wobei die Positionierhilfe ein Wandern des elektronischen Datenträgers aus der vorbestimmten Position heraus während des Formpressens begrenzt.

Aufgabe der Erfindung ist es, eine Membran bereitzustellen, deren Daten flexibel zugeordnet werden können und deren Datenspeicher vor Umwelteinflüssen geschützt wird. Die Membran soll sich auf möglichst preiswerte sowie besonders einfache Weise und mit einem möglichst geringen Materialausschuss herstellen lassen. Dabei soll sich die Membran durch eine hohe Lebensdauer und möglichst geringe Herstellungskosten auszeichnen.

Diese Aufgabe wird erfindungsgemäß durch eine Membran mit maschinenlesbarer Kennzeichnung am Membranlappen gemäß den nebengeordneten Ansprüchen gelöst. Bevorzugte Varianten sind den Unteransprüchen, der Beschreibung und den Zeichnungen zu entnehmen.

Erfindungsgemäß ist in einer Verdickung am Membranlappen einer Membran ein elektronischer Datenträger angeordnet, wobei die Verdickung zylinderförmig ausgebildet ist und der Membranlappen einstückig mit einer Lage der Membran ausgebildet ist.

Gemäß der Erfindung werden durch die Verwendung eines elektronischen Datenträgers die Möglichkeiten der Zuordnung von Daten zu der Membran nahezu unbegrenzt erweitert. So können nicht nur Daten hinsichtlich des Materials, der Abmessungen, der Herstellung und weitere Kenngrößen der Membran in dem Datenträger gespeichert werden, sondern auch Daten, die den jeweiligen Kunden, die Lieferung und weitere Merkmale betreffen. Die gesamten Daten können dabei auf jede einzelne Membran ausgerichtet sein und auf deren jeweils integrierten Datenträger gespeichert werden. Durch das abgedichtete Einschließen des Datenträgers in einer Verdickung am Membranlappen werden ein Schutz des Datenträgers vor Umwelteinflüssen sowie ein Schutz vor dem Betriebsmedium der Membran erreicht. Insbesondere Öle oder Schmutz oder dergleichen haben damit keinen Einfluss auf die Auslesbarkeit von Daten aus dem Datenträger.

Bei dem Datenträger kann es sich um jedes erdenkliche, elektronisches Bauteil handeln, auf dem Daten gespeichert und wieder ausgelesen werden können. Besonders vorteilhaft kann es sich bei dem Datenträger um ein sogenanntes RFID-Element (RFID = radio frequency identification) handeln, das typischerweise einen Transponder aufweist, in den Daten geschrieben werden können, die dann von einem Lesegerät auch wieder gelesen werden können.

Vorzugsweise wird zwischen zwei Elastomer-Lagen eine Gewebeeinlage angeordnet. Anschließend erfolgt eine Vulkanisation der Elastomer-Lagen mit der Gewebeeinlage. Vorzugsweise werden bei der Vulkanisation die Elastomer-Lagen, die neben Ethylen-Propylen-Dien-Kautschuk (EPDM) auch Schwefel bzw. aus Schwefel verwertete Stoffe, wie zum Beispiel Schwefeldifluorid, Katalysatoren bzw. Zinkoxid oder Fettsäuren enthalten können, wie auch mit Feststoffen verwertet sein können, erhitzt. Vorzugsweise werden peroxidvernetzte EPDM-Mischungen eingesetzt. Die Vulkanisation erfolgt meist mit einem Schwefelanteil von 1,8 bis 2,5 Gew.-% und einer Temperatur von ca. 120 bis 160°C. Dabei werden die langkettigen Kautschukmoleküle durch Schwefelbrücken vernetzt. Hierdurch gehen die plastischen Eigenschaften des Kautschuks bzw. der Kautschukmischung verloren und der Stoff wird mittels des Verfahrens der Vulkanisation vom plastischen in den elastischen Zustand überführt. In der Regel ist die Elastizität des Gummiwerkstoffs abhängig von der Anzahl der Schwefelbrücken. Je mehr Schwefelbrücken vorhanden sind, desto härter ist der Gummi. Die Anzahl der Schwefelbrücken ist wiederum abhängig von der zugesetzten Schwefelmenge und der Dauer der Vulkanisation.

Die EPDM-Lagen, die im Compression-Moulding-Verfahren zur Membran vulkanisiert werden, können vorteilhafterweise sehr dünn ausgeführt sein. So ist durchaus möglich, dass die Lagen nur 0,5 - 2 mm betragen. Durch den besonderen Prägevorgang, der vor dem Vulkanisieren stattfindet, kann ein Hohlraum, vorteilhafterweise ein zylinderförmiger Hohlraum, am Membranlappen geformt werden, in denen mindestens ein kleines RFID-Element eingefügt werden kann. Erfindungsgemäß ist das RFID-Element von den mindestens zwei EPDM-Lagen umschlossen. Die offenen Enden des zylinderförmigen Hohlraums können nach dem Einfügen des RFID-Elements mit Stopfen verschlossen werden.

Wenn das Einlegen des RFID-Chips vor dem Vulkanisieren erfolgt, muss der zylinderförmige Hohlraum nicht zwangsläufig bis an die Außenfläche reichen, sodass kein Verschließen notwendig sein muss.

Bei der Herstellung durch Compression Moulding kann ein Hohlraum durch Anordnung eines Platzhalters erzeugt werden, z.B. durch einen Stift, der zwischen zwei Lagen des Lappens eingelegt wird.

Vorteilhafterweise werden die Stopfen eingeklebt, so dass sie den Hohlraum abdichten. Dies ist ein besonders vorteilhafter Schutz für den Einsatz in pharmazeutischen Anlagen, in denen häufig Desinfektionsprozesse durchgeführt werden.

In einer weiteren Variante kann die Membran auch über das Injections-Moulding-Verfahren hergestellt werden. Dabei wird eine Vorrichtung zur Erzeugung des zylinderförmigen Hohlraums am Membranlappen in das Injektionswerkzeug montiert. Nach der Vulkanisation wird der elektronische Datenträger in den Hohlraum eingebettet und mit eingeklebten Stopfen abdichtend verschlossen. Je nach Kundenwunsch kann dabei der Hohlraum quer oder längs zur Erstreckung des Membranlappens ausgebildet werden.

In einer vorteilhaften Variante der Erfindung wird der elektronische Datenträger mit einem Clip am Membranlappen fixiert und darin eingerollt bzw. eingefaltet, so dass dabei eine zylinderförmige Verdickung gebildet wird. Mit weiteren Befestigungselementen wird die Rolle fixiert. Die offenen Enden des Hohlraums können mit eingeklebten Stopfen abdichtend verschlossen werden. Dies ist sowohl vor oder nach dem Vulkanisieren möglich.

Vorzugsweise besteht der innere Bereich der Membran aus einem elastomeren Werkstoff. Vorteilhafterweise aus Ethylen-Propylen-Dien-Kautschuk. Bei einer Variante der Erfindung kann zwischen zwei Lagen eine Gewebeeinlage eingebettet sein und die so konfektionierte Membran vulkanisiert werden. Die Gewebeeinlagen verstärken den inneren Bereich der Membran.

Als besonders günstig erweist es sich, wenn bei der Membrananordnung ein stiftartiges Element formschlüssig in eine Lage integriert wird. Bei dem stiftartigen Element kann es sich um eine Membranschraube handeln. Die Membranschraube kann beispielsweise über eine Spindel mit einem Antrieb verbunden sein. Auf diese Weise kann die Membran verformt werden.

Erfindungsgemäß steht der Membranlappen über die Membranfläche und damit über den Funktionsbereich der Membran heraus. Dadurch ist der Membranlappen und der in der Verdickung integrierte Datenträger von den Prozessbedingungen und den Membranbewegungen entkoppelt. Durch die vorteilhafte Anordnung des Datenträgers in einer Verdickung am Membranlappen wird erreicht, dass ein Lesegerät im Umfeld des Datenträgers platziert und mit dem Lesegerät Daten aus dem Datenträger ausgelesen werden können. Insbesondere kann auf diese Weise erreicht werden, dass beispielsweise Gehäuseteile, zwischen die die Membran verbaut ist, keinen oder nur einen geringen Einfluss auf die Platzierung des Lesegeräts bzw. die Auslesbarkeit der Daten haben.

Die Verdickung, die zylinderförmig ausgebildet ist, ist bei der Handhabung, wie beispielsweise der Montage, besonders griffig und dadurch sehr vorteilhaft. Weiterhin können der Membranlappen und/oder die hervorstehende Verdickung farblich gekennzeichnet sein, um so dem Wartungspersonal leicht ersichtlich das Herstellungsjahr und die Materialkombination der Membran aufzuzeigen.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Schnittdarstellung eines Membranventils,
- Figur 2: eine Schnittdarstellung einer Membrananordnung,
- Figur 3: eine Darstellung des Membranlappens mit Verdickung,
- Figur 4: eine Darstellung des Membranlappens mit zylinderförmiger Verdickung, die quer zur Erstreckung des Membranlappens angeordnet ist,
- Figur 5: eine Darstellung des Membranlappens mit zylinderförmiger Verdickung, die sich in Richtung der Lappenerstreckung erstreckt.

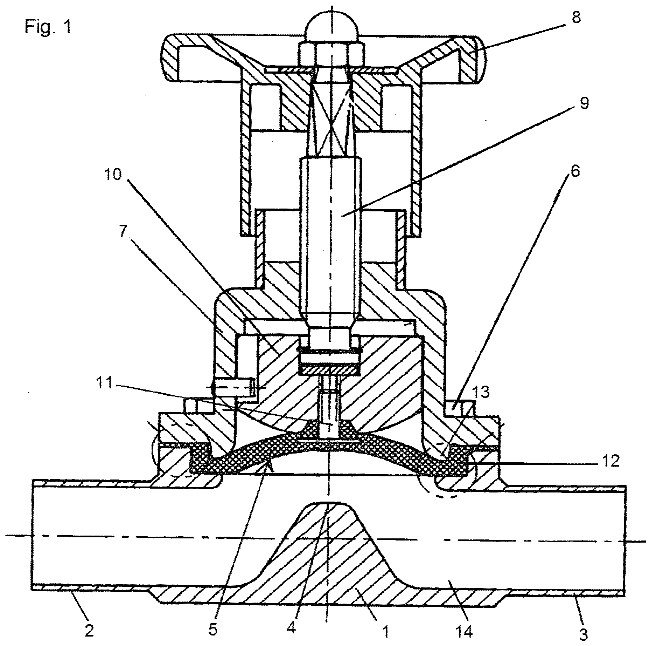

Das in Figur 1 dargestellte Membranventil besitzt ein Gehäuseunterteil 1, welches Anschlüsse 2, 3 und ein Wehr 4 umfasst. Das Wehr 4 dient als Sitzfläche für die Membran 5. Die Membran 5 ist mithilfe von Schrauben 6 eingespannt zwischen dem Gehäuseunterteil 1 und einem Gehäuseoberteil 7. Im Gehäuseoberteil 7 sind die zur Betätigung der Membran 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt. Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine horizontale Verschiebung des Druckstücks 10 bewirkt, sodass sich die Membran 5 verformt und der freie Querschnitt zwischen dem Wehr und der Membrananordnung vergrößert bzw. verkleinert werden kann.

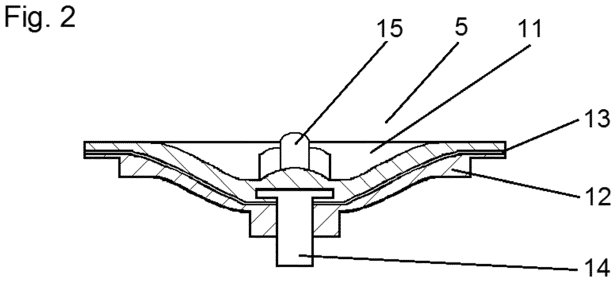

Figur 2 zeigt eine Schnittdarstellung einer Membran 5. Die Membran 5 umfasst eine erste Lage 11, die auf der Mediumseite angeordnet ist. Weiterhin umfasst die Membran 5 eine zweite Lage 12, welches die Rückseite der Membrananordnung bildet. Die beiden Lagen 11 und 12 sind aus einem Elastomer, insbesondere EPDM, gefertigt. Zwischen den beiden EPDM-Lagen 11, 12 ist in dieser Variante eine Gewebe-Einlage 13 angeordnet. Weiterhin umfasst die Membran 5 ein stiftartiges Element 14, das im Ausführungsbeispiel als Membranschraube ausgebildet ist.

Die erste Lage der Membran 5, die der Mediumseite zugeordnet ist, weist eine Dichtlippe 15 auf. Das in Figur 2 dargestellte stiftartige Element 14 kann ein Gewinde aufweisen. Gemäß der Darstellung in Figur 1 ist das stiftartige Element 14 als Membranschraube ausgebildet und weist ein Außengewinde auf, das in ein Innengewinde eingeschraubt wird, welches in einem Druckstück 10 ausgebildet ist. Bei der Membran 5 gemäß der Darstellung in Figur 2 handelt es sich um ein Compound aus zwei EPDM-Lagen 11, 12 und einer dazwischen angeordneten Gewebe-Einlage 13, die durch Vulkanisation miteinander verbunden sind.

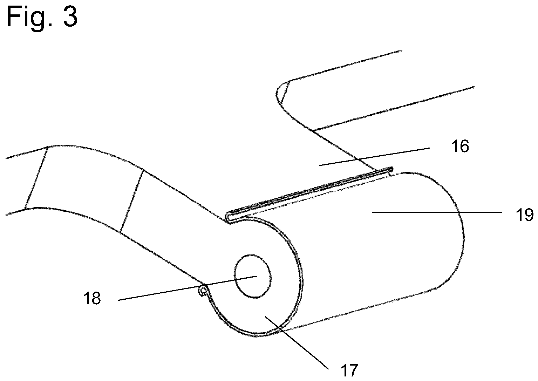

Figur 3 zeigt einen Membranlappen 16, der aus einer Membraneinspannung hinausragt, mit zylinderförmiger Verdickung 17. Um das Ende des Membranlappens 16 wird ein elektronischer Datenträger angeordnet. Der elektronische Datenträger ist mit einem Clip 19 versehen und ist mit diesem einstückig ausgebildet. Durch das Anordnen des Clips 19 um das Ende des Membranlappens 16 bildet sich eine zylinderförmige Verdickung 17. In dieser Variante ist die Verdickung 17 zylinderförmig ausgebildet. Dabei kann in dieser Variante der Erfindung die zylinderförmige Verdickung 17 gebildet werden, in dem der elektronische Datenträger mit Clip 19 in den Membranlappen 16 eingerollt wird. Der Clip 19 verfügt über Befestigungselemente, mit denen er mit dem Membranlappen 16 verbunden ist, so dass er nicht zerstörungsfrei gelöst werden kann.

Bei einem unzulässigen Lösen des Clips würden Befestigungselemente zerstört, so dass eine Manipulation verhindert wird.

Auch der integrierte Datenträger kann nicht zerstörungsfrei entfernt werden. Dabei kann der Membranlappen 16 farblich gestaltet sein, um das Herstellungsjahr und/oder den Werkstoff bzw. die Werkstoffkombination im eingebauten Zustand ersichtlich darzustellen.

In einer alternativen Ausführung könnte auf dem Clip, der einen elektronischen Datenträger enthält, eine optische Kennzeichnung in Form eines 2D-Codes und/oder 3D-Codes vorhanden sein, die Membraninformationen enthält. Somit könnten die gespeicherten Informationen auf verschiedene Wege ausgelesen werden.

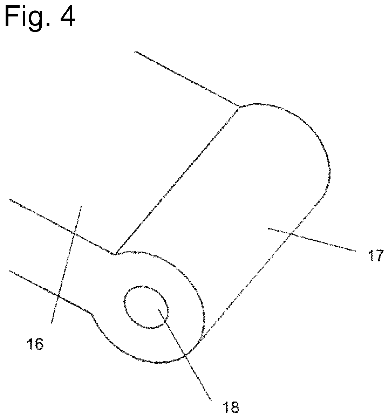

Figur 4 zeigt einen Membranlappen 16, der aus einer Membraneinspannung hinausragt, mit Verdickung 17. Die Verdickung 17 ist vorzugsweise zylinderförmig und erstreckt sich quer zur Erstreckung des Membranlappens 16. Die Verdickung 17 weist einen Hohlraum auf. In diesem Hohlraum ist der elektronische Datenträger angeordnet. Die Stirnseiten der zylinderförmigen Verdickung 17 sind vorzugsweise verschlossen, insbesondere mit eingeklebten Stopfen 18 abdichtend verschlossen. Bei einer Variante wird bereits bei der Vulkanisation ein Stopfen eingelegt und beim Compression Molding mit vulkanisiert.

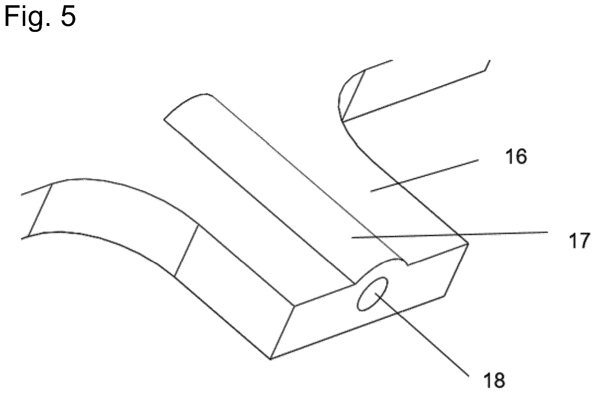

Figur 5 zeigt einen Membranlappen 16, der aus einer Membraneinspannung hinausragt, mit Verdickung 17. Die Verdickung 17 erstreckt sich in Richtung der Lappenerstreckung. Die Verdickung 17 ist vorzugsweise zylinderförmig. Die Stirnseite der Verdickung 17 ist vorteilhafterweise verschlossen, insbesondere mit einem eingeklebten oder einvulkanisierten Stopfen 18 abdichtend verschlossen.

## Patentansprüche

1. Membran (5) für ein Membranventil, die Räume dichtend voneinander trennt, wobei die Membran (5) zwischen zwei Gehäuseteilen anordenbar ist, wobei die Membran (5) einen Membranlappen (16) umfasst, der geeignet ist, um über eine Membraneinspannung hinauszuragen, **dadurch gekennzeichnet, dass** der Membranlappen (16) eine Verdickung (17) mit mindestens einem elektronischen Datenträger aufweist, wobei die Verdickung (17) zylinderförmig ausgebildet ist und der Membranlappen (16) einstückig mit einer Lage der Membran (5) ausgebildet ist.

2. Membran nach Anspruch 1, **dadurch gekennzeichnet, dass** die Verdickung (17) den elektronischen Datenträger umgibt.

3. Membran nach Anspruch 1 oder 2, **dadurch gekennzeichnet, dass** der elektronische Datenträger um die Verdickung (17) angeordnet ist.

4. Membran nach einem der Ansprüche der Ansprüche 1 bis 3, **dadurch gekennzeichnet, dass** der elektrische Datenträger (19) unlösbar zur Verhinderung einer Manipulation mit dem Membranlappen (16) verbunden ist.

5. Membran nach einem der Ansprüche 1 bis 4, **dadurch gekennzeichnet, dass** der elektronische Datenträger zur Bildung der Verdickung (17) in den Membranlappen (16) eingefaltet und/oder eingerollt ist.

6. Membran nach einem der Ansprüche 1 bis 5, **dadurch gekennzeichnet, dass** mindestens eine Lage einen einstückigen Fortsatz aufweist, der einen aus einer Einspannung herausragenden und durch das Compression-Moulding-Verfahren geformten Membranlappen (16) bildet.

7. Membran nach einem der Ansprüche 1 bis 6, **dadurch gekennzeichnet, dass** ein Hohlraum, in dem der Datenträger angeordnet ist, mit Verschlusselementen (18) abgedichtet ist.

8. Membran nach einem der Ansprüche 1 bis 7, **dadurch gekennzeichnet, dass** der elektronische Datenträger ein RFID-Element ist.

9. Membran nach einem Ansprüche 1 bis 8, **dadurch gekennzeichnet**, der Membranlappen (16) aus mindestens einer und höchstens zwei Lagen gebildet wird.

## Claims

1. Diaphragm (5) for a diaphragm valve which sealingly separates spaces from one another, wherein the diaphragm (5) can be arranged between two housing parts, wherein the diaphragm (5) comprises a diaphragm tab (16), which is suitable for projecting beyond a diaphragm clamp, **characterized in that** the diaphragm tab (16) has a thickening (17) with at least one electronic data carrier, wherein the thickening (17) is cylindrically formed and the diaphragm tab (16) is formed integrally with a layer of the diaphragm (5).

2. Diaphragm according to Claim 1, **characterized in that** the thickening (17) surrounds the electronic data carrier.

3. Diaphragm according to Claim 1 or 2, **characterized in that** the electronic data carrier is arranged around the thickening (17).

4. Diaphragm according to one of Claims 1 to 3, **characterized in that** the electrical data carrier (19) is inseparably connected to the diaphragm tab (16) to prevent manipulation.

5. Diaphragm according to one of Claims 1 to 4, **characterized in that** the electronic data carrier is incorporated in the diagram tab (16) by being folded and/or rolled in to form the thickening (17).

6. Diaphragm according to one of Claims 1 to 5, **characterized in that** at least one layer has an integral extension, which forms a diaphragm tab (16) which projects from a clamp and is formed by the compression-moulding process.

7. Diaphragm according to one of Claims 1 to 6, **characterized in that** a cavity in which the data carrier is arranged is sealed off by closure elements (18).

8. Diaphragm according to one of Claims 1 to 7, **characterized in that** the electronic data carrier is an RFID element.

9. Diaphragm according to one of Claims 1 to 8, **characterized in that** the diaphragm tab (16) is formed by at least one and at most two layers.

## Revendications

1. Membrane (5) pour une vanne à membrane, qui sépare des espaces entre eux de manière étanche, la membrane (5) étant apte à être agencée entre deux parties de boîtier, la membrane (5) comprenant une languette (16) de membrane qui est adaptée pour faire saillie d'un serrage de membrane, **caractérisée en ce que** la languette (16) de membrane présente une partie épaissie (17) avec au moins un support de données électronique, la partie épaissie (17) étant de forme cylindrique et la languette (16) de membrane étant formée d'une seule pièce avec une couche de membrane (5).

2. Membrane selon la revendication 1, **caractérisée en ce que** la partie épaissie (17) entoure le support de données électronique.

3. Membrane selon la revendication 1 ou la revendication 2, **caractérisée en ce que** le support de données électronique est agencé autour de la partie épaissie (17).

4. Membrane selon l'une des revendications 1 à 3, **caractérisée en ce que** le support de données électrique (19) est relié de manière inamovible à la languette de la membrane (16) afin d'empêcher toute manipulation.

5. Membrane selon l'une des revendications 1 à 4, **caractérisée en ce que** le support de données électronique est plié et/ou enroulé dans la languette (16) de membrane pour former la partie épaissie (17).

6. Membrane selon l'une des revendications 1 à 5, **caractérisée en ce qu'**au moins une couche présente un prolongement d'un seul tenant qui forme une languette (16) de membrane dépassant d'un serrage et formée par un procédé de moulage par compression.

7. Membrane selon l'une des revendications 1 à 6, **caractérisée en ce qu'**une cavité, dans laquelle est placé le support de données, est fermée de manière étanche par des éléments de fermeture (18).

8. Membrane selon l'une des revendications 1 à 7, **caractérisée en ce que** le support de données électronique est un élément RFID.

9. Membrane selon l'une des revendications 1 à 8, **caractérisée en ce que** la languette (16) de membrane est formée par au moins une couche et par au plus deux couches.
